# EUROPEAN PATENT APPLICATION

(11) **EP 3 333 372 A1**
(43) Date of publication of application: **13.06.2018**
(21) Application number: 16203109.0
(22) Date of filing: 09.12.2016
(51) Int. Cl.: F01D 11/02, F16J 15/08, F16J 15/44, F16J 15/447, F01D 11/00

(54) **TURBINE, CORRESPONDING STEAM TURBINE AND OPERATING METHOD**

(71) Applicant: General Electric Technology GmbH, 5400 Baden (CH)
(72) Inventor: STEIN, Peter Joachim, 5401 Baden (CH); THIELE, Volker Hubert, 68309 Mannheim (DE); MATHIS, Fabian Luca, 5401 Baden (CH)
(74) Representative: General Electric Technology GmbH

(57) **Abstract**

The present application provides a turbine (10). The turbine (10) may include a rotor (55), a casing (200), and a gland seal system (100) positioned between the rotor (55) and the casing (25). The gland seal system (100) may include a backside seal (200) positioned about the casing (25).

## Description

### TECHNICAL FIELD

The present application and resultant patent relate generally to seals for use with rotary machines and more particularly relate to a backside seal for a gland system of a steam turbine and the like.

### BACKGROUND OF THE INVENTION

Generally described, steam turbines and the like may have a defined steam path that includes a steam inlet, a turbine section, and a steam outlet. Steam leakage, either out of the steam path, or into the steam path from an area of higher pressure to an area of lower pressure, may adversely affect the operating efficiency of the steam turbine. For example, steam path leakage in the steam turbine between a rotating shaft and a circumferentially surrounding turbine casing may lower the overall efficiency of the steam turbine.

Shaft and piston seals in the steam turbine typically may be of a labyrinth type. The sealing teeth or strips at the casing side may be placed on flexible segments so as to accommodate contact with the rotor during, for example, start up or shut down without resulting in damage. This leakage typically may be prevented or slowed by a gland sealing system.

### SUMMARY OF THE INVENTION

The present application and the resultant patent thus provide a turbine. The turbine may include a rotor, a casing, and a gland seal system positioned between the rotor and the casing. The gland seal system may include a backside seal positioned about the casing.

The present application and the resultant patent further provide a method of operating a turbine. The method may include the steps of positioning a labyrinth seal between a casing and a rotor, positioning a backside seal between the labyrinth seal and a cavity of the casing, rotating the rotor, and blocking a steam leakage path through the cavity with the backside seal.

The present application and the resultant patent further provide a steam turbine. The steam turbine may include a rotor, a casing with a cavity, a labyrinth seal positioned between the rotor and the cavity of the casing, and a backside seal positioned between the labyrinth seal and the cavity of the casing.

These and other features and improvements of the present application and the resultant patent will be become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of an exemplary steam turbine.
Fig. 2 is a cross sectional view of a gland seal system of the steam turbine of Fig. 1.
Fig. 3 is a schematic diagram of a backside seal as may be described herein within the gland seal system.
Fig. 4 is a schematic diagram of an alternative embodiment of a backside seal as may be described herein.

### DETAILED DESCRIPTION

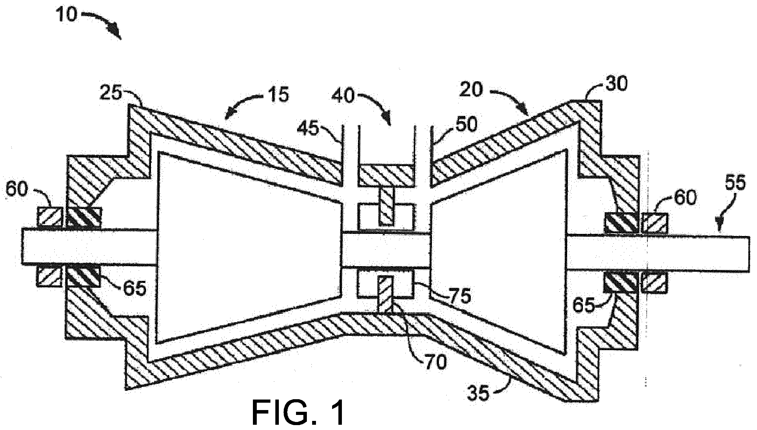

Referring now to the drawings, in which like numerals refer to like elements throughout the several views, Fig. 1 shows a schematic diagram of an example of a steam turbine 10. Generally described, the steam turbine 10 may include a high pressure section 15 and an intermediate pressure section 20. Other pressures in other sections also may be used herein. An outer shell or casing 25 may be divided axially into an upper half section 30 and a lower half section 35. A central section 40 of the casing 25 may include a high pressure steam inlet 45 and an intermediate pressure steam inlet 50. Within the casing 25, the high pressure section 15 and the intermediate pressure section 20 may be arranged about a rotor 55. The rotor 55 may be supported by a number of bearings 60. A steam seal unit 65 may be located inboard of each of the bearings 60. An annular section divider 70 may extend radially inward from the central section 40 towards the rotor. The divider 70 may include a number of packing casings 75. Other components and other configurations may be used.

During operation, the high pressure steam inlet 45 receives high pressure and high temperature steam from a steam source. The steam may be routed through the high pressure section 15 such that work is extracted from the steam by rotation of the rotor 55. The steam exits the high pressure section 15 and then may be returned to the steam source for reheating. The reheated steam then may be rerouted to the intermediate pressure section inlet 50. The steam may be returned to the intermediate pressure section 20 at a reduced pressure as compared to the steam entering the high pressure section 15 but at a temperature that is approximately equal to the temperature of the steam entering the high pressure section 15. Accordingly, an operating pressure within the high pressure section 15 may be higher than an operating pressure within the intermediary section 20 such that the steam within the high pressure section 15 tends to flow towards the intermediate section 20 through leakage paths that may develop between the high pressure 15 and the intermediate pressure section 20. One such leakage path may extend through the packing casing 75 about the rotor shaft 55. Other leaks may develop across the steam seal unit 65 and elsewhere.

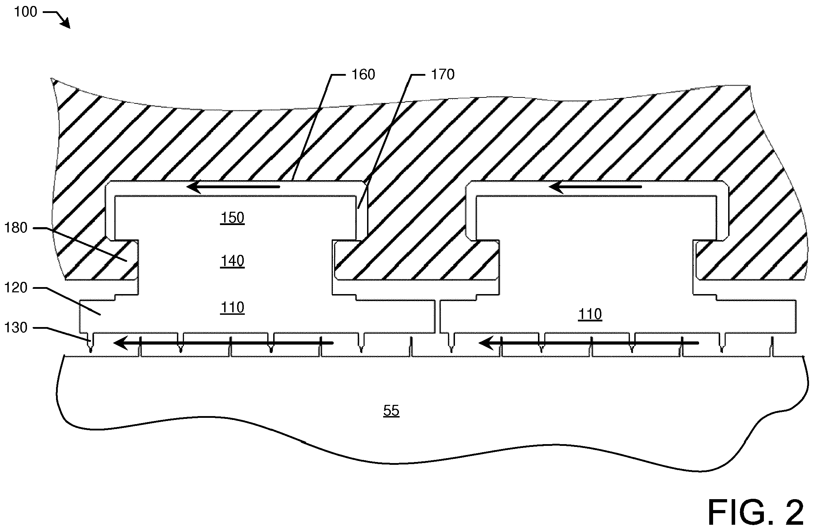

Fig. 2 is a schematic diagram of a gland seal system 100 as may be used herein. The gland seal system 100 may be used to limit the leakage flow therethrough. The gland seal system 100 may be used about the packing casing 75, the seal unit 65, or elsewhere. Specifically, the gland seal system 100 may be positioned between the rotor 55 and the casing 25. The gland seal system 100 may include an axial series of circumferential labyrinth seals 110. Each labyrinth seal 110 may include a sealing ring 120. The sealing ring 120 may extend in any number of segments. A number of labyrinth teeth 130 may extend from the sealing ring 120 towards the rotor 55. The sealing ring 120 may be connected to a neck ring 140 and a head ring 150. The head ring 150 may be positioned within a casing cavity 160. The head ring 150 may be supported therein on a pair of cavity shoulders 170. The neck ring 140 may extend through a cavity groove 180. The cavity groove 180 leads to the casing cavity 160. Other components and other configurations may be used herein.

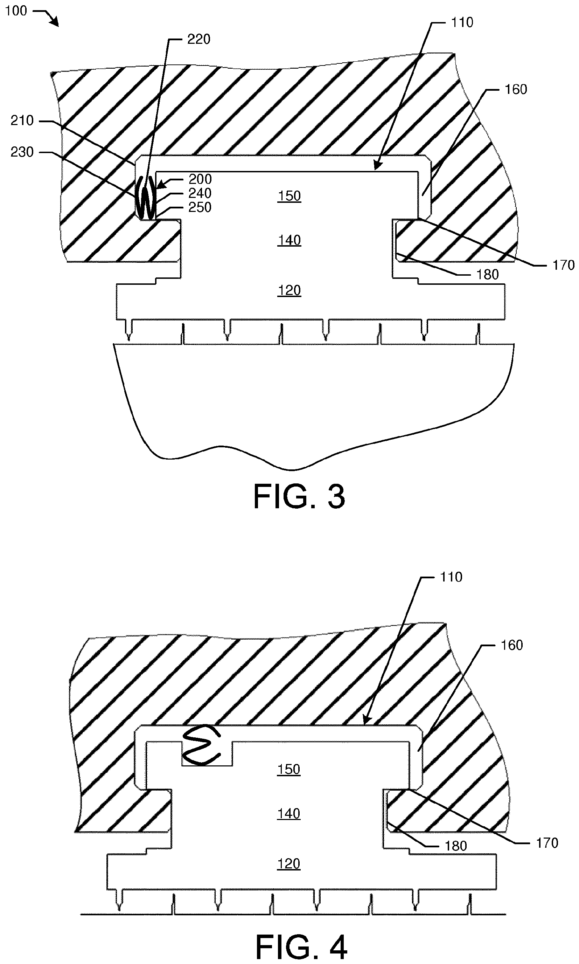

As described above, a significant portion of the overall leakage may occur about the labyrinth seals 110 and the casing cavity 160. Fig. 3 shows the use of backside seal 200 as may be described herein within the gland seal system 100. The backside seal 200 may be positioned between the head ring 150 and a backside 210 of the casing cavity 160 (with respect to the steam flow direction). The backside seal 200 may be positioned on the cavity shoulders 170. Each backside seal 200 may include a middle apex 220 and a pair of opposed legs 230, 240 in a substantial "E" or "W" like shape. The first leg 230 may be positioned up against the backside 210 of the casing cavity 160 with the second leg 240 positioned against the head ring 150. In this embodiment, the backside seal 200 may have a substantially vertical configuration 250. Other components and other configurations may be used herein.

The backside seal 200 may be fabricated from a material that provides flexibility at the middle apex 220 but with substantial rigidity about the legs 230, 240 so as to withstand a pressure differential thereacross. The backside seal 200 may be designed for high cyclic deflections. The backside seal 200 may withstand temperatures of up to about 1300 degrees Fahrenheit (704 degrees Celsius) and pressure of up to about 10,000 PSI with high spring back capacity. The backside seal 200 made out of different types of superalloys with or without plating and/or coatings. The backside seal 200 may have a surface roughness of about Ra0.8 or otherwise. An example of a suitable backside seal 200 may be a "E-SEAL" offered by Jetseal, Inc. of Spokane, Washington. Other types of backside seals 200 may be used herein. The backside seal 200 thus maintains the head ring 150 of the labyrinth seal 110 in place so as to provide good sealing.

The gland seal system 100 with the backside seal 200 thus provides good sealing through the casing cavity 160. The backside seal 200 largely seals the gap therein, is temperature and pressure resistant, and maintains overall flexibility. Reducing the leakage therethrough should improve overall plant cycle efficiency. The gland seal system 100 may be original equipment or part of a retrofit.

Fig. 4 shows an alternative embodiment of the backside seal 200. In this example, the backside seal 200 may have a substantially horizontal configuration 260. The backside seal 200 may be positioned about the backside 210 of the casing cavity 160 as described above or the backside seal 200 may be positioned within a seal slot 270 in the head ring 150 or elsewhere. The horizontal configuration 260 also provides good sealing through the casing cavity 160. Other components and other configurations may be used herein.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof. Various aspects and embodiments of the present invention will now be defined by the following numbered clauses:
1. A turbine, comprising:
   a rotor;
   a casing; and
   a gland seal system positioned between the rotor and the casing;
   the gland seal system comprising a backside seal positioned about the casing.
2. The turbine of clause 1, wherein the gland seal system comprises a labyrinth seal.
3. The turbine of clause 2, wherein the labyrinth seal comprises a plurality of sealing teeth facing the rotor.
4. The turbine of clause 2, wherein the labyrinth seal comprises a sealing ring, a neck ring, and a head ring.
5. The turbine of clause 4, wherein the casing comprises a casing cavity and wherein the head ring is positioned therein.
6. The turbine of clause 5, wherein the casing cavity comprises a shoulder and wherein the head ring is positioned thereon.
7. The turbine of clause 6, wherein the backside seal is positioned on the shoulder.
8. The turbine of clause 5, wherein the casing cavity comprises a backside and wherein the backside seal is positioned between the backside and the head ring.
9. The turbine of clause 4, wherein the casing comprises a cavity groove and wherein the neck ring is positioned therein.
10. The turbine of clause 1, wherein the backside seal comprises a substantial "W" shape.
11. The turbine of clause 1, wherein the backside seal comprises a middle apex, a first leg, and a second leg.
12. The turbine of clause 11, wherein the middle apex comprises a flexible middle apex, wherein the first leg comprises a rigid first let, and wherein the second leg comprises a rigid second leg.
13. The turbine of clause 1, wherein the backside seal comprises a superalloy.
14. The turbine of clause 1, wherein the turbine comprises a steam turbine.
15. A method of operating a turbine, comprising:
   positioning a labyrinth seal between a casing and a rotor;
   positioning a backside seal between the labyrinth seal and a cavity of the casing;
   rotating the rotor; and
   blocking a steam leakage path through the cavity with the backside seal.
16. A steam turbine, comprising:
   a rotor;
   a casing;
   the casing comprising a cavity;
   a labyrinth seal positioned between the rotor and the cavity of the casing; and
   a backside seal positioned between the labyrinth seal and the cavity of the casing.
17. The steam turbine of clause 16, wherein the labyrinth seal comprises a sealing ring, a neck ring, and a head ring.
18. The steam turbine of clause 17, wherein head ring is positioned within the cavity of the casing.
19. The steam turbine of clause 16, wherein the cavity comprises a shoulder and wherein the backside seal is positioned on the shoulder.
20. The steam turbine of clause 16, wherein the backside seal comprises a substantial "W" shape.

## Claims

1. A turbine (10), comprising:
a rotor (55);
a casing (25); and
a gland seal system (100) positioned between the rotor (55) and the casing (25);
the gland seal system (100) comprising a backside seal (200) positioned about the casing (25).

2. The turbine (10) of claim 1, wherein the gland seal system (100) comprises a labyrinth seal (110).

3. The turbine (10) of claim 1 or claim 2, wherein the labyrinth seal (110) comprises a plurality of sealing teeth (130) facing the rotor (55).

4. The turbine (10) of claim 2 or claim 3, wherein the labyrinth seal (110) comprises a sealing ring (120), a neck ring (140), and a head ring (150).

5. The turbine (10) of claim 4, wherein the casing (25) comprises a casing cavity (160) and wherein the head ring (150) is positioned therein.

6. The turbine (10) of claim 5, wherein the casing cavity (160) comprises a shoulder (170) and wherein the head ring (150) is positioned thereon.

7. The turbine (10) of claim 6, wherein the backside seal (200) is positioned on the shoulder (170).

8. The turbine of any of claims 5 to 7, wherein the casing cavity (160) comprises a backside (210) and wherein the backside seal (200) is positioned between the backside (210) and the head ring (150).

9. The turbine (10) of claim 4, wherein the casing (25) comprises a cavity groove (180) and wherein the neck ring (140) is positioned therein.

10. The turbine (10) of any preceding claim, wherein the backside seal (200) comprises a substantial "W" shape.

11. The turbine (10) of any preceding claim, wherein the backside seal (200) comprises a middle apex (220), a first leg (230), and a second leg (240).

12. The turbine (10) of claim 11, wherein the middle apex (220) comprises a flexible middle apex, wherein the first leg (230) comprises a rigid first let, and wherein the second leg (240) comprises a rigid second leg.

13. The turbine (10) of any preceding claim, wherein the backside seal (200) comprises a superalloy.

14. A steam turbine, comprising:
a rotor (55);
a casing (25);
the casing comprising a cavity;
a labyrinth seal (110) positioned between the rotor and the cavity of the casing; and
a backside seal (200) positioned between the labyrinth seal and the cavity of the casing.

15. A method of operating a turbine (10), comprising:
positioning a labyrinth seal (110) between a casing (25) and a rotor (55);
positioning a backside seal (200) between the labyrinth seal (110) and a cavity (160) of the casing (25);
rotating the rotor (55); and
blocking a steam leakage path through the cavity (160) with the backside seal (200).
